# EUROPEAN PATENT APPLICATION

(11) **EP 2 857 168 A1**
(43) Date of publication of application: **08.04.2015**
(21) Application number: 13275241.1
(22) Date of filing: 02.10.2013
(51) Int. Cl.: B29C 33/30

(54) **Flexible tooling**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A flexible manufacturing tool is provided. The tool includes a multi-layer generally planar sheet of material defining a tool surface thereon, means such as spaced jacks to controllably deform the sheet by applying out-of-plane deforming forces to the sheet and means selectively to increase and decrease interlayer shear or frictional forces whereby to vary the flexural stiffness of the sheet. Such means may comprise applying a vacuum between the layers to increase interlayer friction or the use of softenable polymers between the layers.

## Description

This invention relates to flexible, or variable geometry, mould tooling, often used for the manufacture of composites, and in particular to a sheet defining a flexible tool surface.

The largest capital outlay in composite manufacture is often in the design, manufacture and storage of mould tooling.

The tool surface is typically a metallic or composite that is manufactured to high tolerance with a smooth surface finish and surface coated for improved release properties so that the moulded component may be removed from the tool surface. The surface is supported by a substructure, usually metal or wood, that must carry the mass of the work-piece, tool surface and allow personnel access.

The following invention details methods to facilitate the operation of a variable geometry mould tool. A variable geometry tool allows multiple components having different shapes to be manufactured using a single piece of tooling equipment. This significantly reduces the cost of manufacturing composite components and reduces their in-service costs by reducing tool storage requirements.

An additional benefit is that alterations in the component geometry can be implemented with minimal costs; this is particularly advantageous where designs may be refined during operational service or after early trials.

Known systems are based on a tooling sheet supported on a series of parallel pins, or "pogoes" arranged in an array and with controllable displacement in a single (lengthwise) axis and generally perpendicular to the plane of the tooling sheet. For example, Bernardon (US5151277) features a reconfigurable array of close packed pogoes, so that relative adjustment of the pogo height causes variability in the surface shape created by the tips of the pogo array. The mould tool surface, of a flexible bladder material, is layed over the surface of the pogoes. This provides both an effective seal for liquid moulding material and an interpolated surface to minimise unwanted deviations in the surface geometry between pogoes.

There exists, however, a conflict in the selection of an appropriate flexible tooling sheet. The sheet must be rigid enough so that the number of actuated pogoes in the array can be kept to a minimum. Here, increased flexural stiffness of the face sheet increases the potential span between pogoes for a given tolerance in lateral deflection. However, to reduce loading on the actuated pogo array, the tooling sheet should also be as flexible as possible, minimising the stored elastic energy of deformation and the reaction forces applied to each pogo.

These conflicting requirements for a tooling sheet have not, so far, been satisfactorily met.

According to a first aspect of the invention there is provided a flexible manufacturing tool, including a multi-layer generally planar sheet of material defining a tool surface thereon, means to controllably deform the sheet by applying out-of-plane deforming forces to the sheet at predetermined locations across the sheet and means selectively to increase and decrease interlayer shear forces whereby to vary the flexural stiffness of the sheet.

Thus, according to the invention, the flexure stiffness may be actively controlled, switching from a stiff panel during moulding operations to a temporary low stiffness state for transfer to a new configuration. By reducing the interlayer shear stiffness, the flexural stiffness of the panel as a whole is reduced, as each layer or ply bends about its own neutral axis.

The interlayer shear forces may be simply frictional forces generated between adjacent layers of the sheet, wherein the frictional force will vary with the normal reaction between the layers.

The layers of the tooling sheet may be metallic, such as aluminium or an alloy thereof. Alternatively, the layers may be of other suitable material such as carbon fibre reinforced plastics or glass fibre reinforced plastics.

The means selectively to increase and decrease interlayer frictional forces may comprise vacuum means adapted selectively to apply a vacuum between the layers and thus cause atmospheric pressure to press them together.

The coefficient of friction and/or interlocking mechanical features between adjacent plies provide the necessary interlayer shear strength to increase the overall flexural stiffness of the tooling sheet.

The vacuum means may comprise vacuum bagging means adapted to make airtight contact with a periphery of the sheet of material whereby to apply the vacuum between the layers.

Alternatively, the means selectively to increase and decrease the interlayer shear forces may comprise layers of softenable material interspersed between the layers of the sheet and means to harden and soften the layers of softenable material, respectively.

The softenable material may comprise a meltable material whereby the softenable material is softenable at least to the melting point of the material.

The softenable material may comprise a polymer such as a thermoplastic material, for example polystyrene, and the means to soften the softenable material may comprise heating means. The softening of the softenable material allows creep to take place via a viscoelastic creeping mechanism. Such heating means may comprise contact heating means or hot gas heating means. Contact heating means may comprise one or more heating elements, such as electrical heating elements, attached to the sheet or indeed integrated into one or more of the polymer interlayers. Hot gas heating means may comprise one or more blowers aimed at upper and/or lower surfaces of the tooling sheet. Blowers aimed at the lower surface of the tooling sheet may be permanently mounted, whereas such blowers aimed at the moulding surface of the tool may be removable when not required.

Use of thermoplastic interlayers, when heated to a softening temperature, permits gradual flexure of the sheet. This effect relies on the viscoelastic creep behaviour of a thermoplastic polymer with a mechanism described as slipping polymer chains in the interlayer.

Use of thermoplastic interlayers, when heated to or beyond their melting temperature, permits gross and rapid flexure of the sheet. This system transforms the interlayers to a liquid state giving the most significant reduction of interlayer shear properties.

Cooling means may also be provided to cool the softenable material, to decrease the heating and cooling cycle time of the sheet and therefore to allow an increased production rate for products of differing geometry moulded on the tool. Such cooling means may form part of a gas heating means, as described above, with cooling elements to cool the gas rather than heat it. Alternatively, the cooling means may comprise contact cooling means, such as a refrigerated pipe network, which may be attached to the underside of the tooling sheet.

An additional issue in the design of variable geometry tooling is the interface between the pogoes and the tooling sheet. Previous solutions have included vacuum cup attachments between the sheet and pogoes, or a fastened or bonded interface. However, when forming shapes which require a large differentiation between the respective heights of two adjacent pogoes, an additional planar mode of deformation, i.e. stretching or compression, is initiated in the tooling sheet. For example, considering a sheet constructed from carbon fibre reinforced polymer (CFRP) composite, the typical in-plane strain limits for this material are of the order 0.3%. Assuming rigid attachment of the sheet to pogoes, with separation *L*, the maximum height differential between adjacent pogoes will be of the order *0.078L,* which assumes that the presence of compressive loading will lead to buckling of the sheet.

To minimise planar stretching of the sheet, it is possible to detach the sheet from the pogoes prior to arranging the pogo array into the desired configuration. The sheet may then be attached, for example using vacuum chucks, so that minimal planar strain is induced in the sheet. A practical problem associated with this solution is the handling of large sheets, which for large marine and renewable energy structures may range from 2 to 10m in each planar axis. Considering a 5m x 5m x 6mm CFRP sheet, with an estimated mass of 300kg, it would be difficult to handle it in a manner that does not lead to fracture under its own mass and/or damage due to impact events.

A further problem with known vacuum chucks is that the accurate forming of the tooling sheet to any desired mould shape requires the chucks to be "active" and for vacuum to be applied whilst the sheet is being bent to shape. For sheet configurations of greater curvature, this is precisely when the chucks need to be released to allow in-plane movement of the sheet relative to the tops of the pogoes.

A novel system for attachment of pogoes to the underside of a flexible tooling sheet is proposed. The clamping system must maintain positional accuracy of the sheet in a single axis, e.g. vertical or z-axis, whist permitting displacement and stretching of it in the in-plane axes, e.g. horizontal or x- and y-axes.

According to a second aspect of the invention there is provided a rolling vacuum attachment for attaching a member upon which the vacuum attachment is mounted to a sheet of material, the attachment comprising a hollow perforated ball rotatable in a cup, the ball being rotatably engageable with a conformable surface defined on the sheet of material whereby to attach the ball to the conformable surface, wherein the cup is connectable to a vacuum source whereby to apply a vacuum between the perforated surface of the ball not contained within the cup and the conformable surface of the tooling sheet and wherein the ball is rotatable across the conformable surface while vacuum is applied thereto.

The means to controllably deform the sheet by applying out-of-plane deforming forces to the sheet at predetermined locations across the sheet may comprise a series of adjustable supports for the sheet, spaced across the sheet, wherein each support is attachable to the sheet with a said rolling vacuum attachment.

The surface may be defined on the tooling sheet whereby to attach the ball to the tooling sheet.

The cup may be attached to a member in the form of an adjustable support for the tooling sheet which is connectable to the vacuum source whereby to apply a vacuum between the conformable surface of the tooling sheet and the member or adjustable support.

The hollow perforated ball is preferably rigid. An elastomeric O-ring type seal may be located around a periphery of the cup, such that air drawn by the vacuum supply is drawn via the surface perforations of the ball not surrounded by the cup through the hollow core of the ball and thereafter toward the vacuum supply.

In the regions of the intended interface with the pogoes, the underside of the tooling sheet may be covered in a layer of elastomeric material such as medium density polymeric foam.

Upon placing the tooling sheet on the pogo array, the elastomeric material in the region of each contacting ball may be compressed by the weight of the tooling sheet and also, if necessary, by additional force. This compression preferably leads to coverage of substantially all the perforations in the exposed surface of the ball. When vacuum is applied to the rolling vacuum attachment, the tooling sheet is additionally attracted to the pogo via atmospheric pressure acting on the cup and sheet.

If an in-plane load is applied to the tooling sheet, for example through the relative displacement of adjacent pogoes, rotation of the ball will permit in-plane translation of the sheet transverse to the axis top of the pogo, with rotation of the ball causing rolling of the ball along the underside of the sheet. An abundance of perforations over the entire surface of the ball is preferred. This, combined with the deformation behaviour of the elastomeric material, will maintain a substantially constant vacuum attraction between the pogo and tooling sheet whether the ball is rolling or stationary.

According to a third aspect of the invention there is provided a method of configuring a tooling sheet for a flexible moulding tool, the tooling sheet comprising a multi-layer generally planar sheet of material defining a tool surface thereon and adjacent layers of the sheet defining a variable shear interface therebetween, the method including the steps of reducing the interlayer shear forces, adjusting the shape of the tooling sheet to a desired moulding configuration and subsequently increasing the interlayer shear forces whereby to increase the overall flexural stiffness of the tooling sheet for moulding to take place.

According to a fourth aspect of the invention there is provided a manufacturing tool having a body, the body having a layer of low surface energy polymer attached thereto, said layer defining a tool surface of the manufacturing tool.

The invention will now be described by way of example with reference to the accompanying drawings of which:-
Figures 1a, 1b and 1c are schematic side views of a stack of plies, straight and in different states of bending;
Figure 2a and 2b are schematic side views of a stack of plies, according to the invention, without and with vacuum applied, respectively;
Figures 3a and 3b are schematic side views of a stack of plies, according to the invention, in uncompressed and compressed states, respectively;
Figures 4a and 4b are schematic side views of an alternative stack of plies, according to the invention, in uncompressed and compressed states, respectively;
Figure 5 is a side view, partly in section, of a vacuum cup mounting for a flexible tooling sheet, according to the invention, and
Figure 6 is a schematic side view of a tooling sheet according to the invention supported by extendible pogoes.

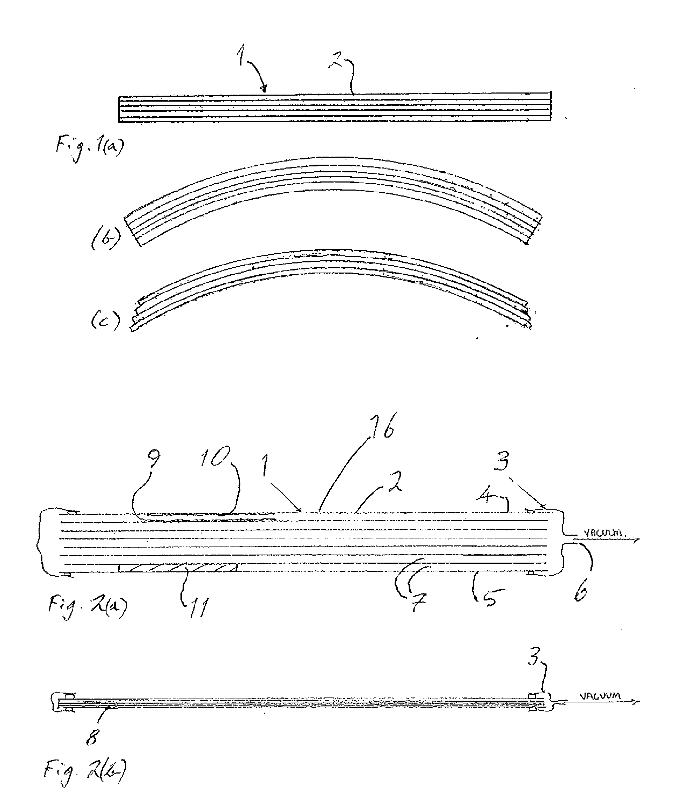

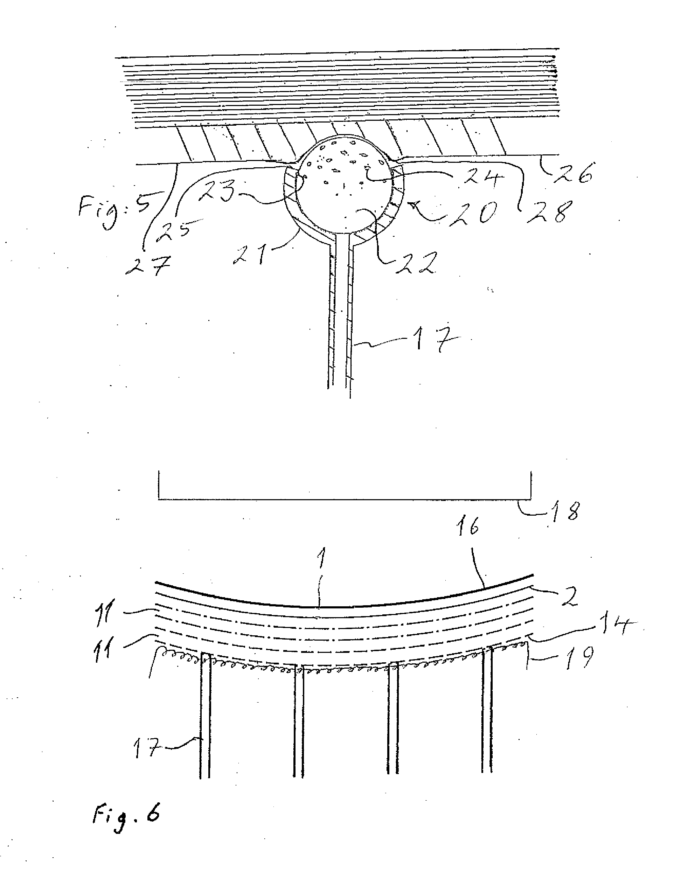

Referring to the drawings, Figure 2a shows schematically a stacked sequence, or laminate 1, of 8 aluminium layers or plies 2. The separation between plies is greatly exaggerated, for clarity. Each ply 2 has a thickness of 1mm. and is used for the tooling sheet in a flexible or variable geometry tool such as is shown in Figure 6. The perimeters of the aluminium plies 2 are enclosed by an airtight bellows 3, which is fabricated from a durable thermoplastic or elastomer, e.g. polyurethane, and bonded to upper 4 and lower 5 aluminium plies of the sheet. The perimeter bellows also includes a number of regularly spaced vacuum connections 6 that are coupled to a vacuum supply (not shown).

Upon application of a vacuum, as shown in Figure 2b, air is evacuated from inter-ply regions 7 of the sheet leading to creation of a pressure differential between the surrounding atmosphere and the inter-ply regions 7. This compresses the aluminium plies 2 together, as shown in Figures 1b and 2b, causing the plies to behave, under a limited flexure load, in a manner similar to an 8mm thick homogeneous aluminium plate, as shown in Figure 1b. This is due to the imposition of strain constraints at the interface 8 between each pair of plies 2 equivalent to those experienced within each ply.

Taking a 1D Euler beam approximation of the system, the apparent flexure stiffness of the unclamped lamination, as shown in figure 1c, is 64 times less than the clamped lamination of Figure 1b. This ratio between the flexure stiffness of unclamped and vacuum clamped sheets may be increased further by increasing the number of plies 2. For example, a 24 ply laminate with the same mass as the previously embodied 8 ply laminate would have a clamped flexure stiffness approaching 600 times that of the unclamped version.

The clamped stiffness of the sheet is reliant upon the frictional force generated between plies 2. Assuming a clean aluminium surface, static friction coefficients of 1.2 to 1.3 may typically be observed. Therefore, assuming 100kPa atmospheric clamping pressure, the required shear stress to induce sliding between the elements would be ∼120kPa. In contrast, the interlayer shear strength of a carbon fibre composite is of the order 30-50MPa, 250 times that which can be achieved between flat aluminium layers.

To address this, a series of interlocking features 9, 10 may be formed on the aluminium plies 2. Such features may only be formed at the micro scale. Alternatively more intimate contact between adjacent ply surfaces may be achieved by the introduction of a compliant coating or interlayer 11, shown in Figure 2a for convenience.

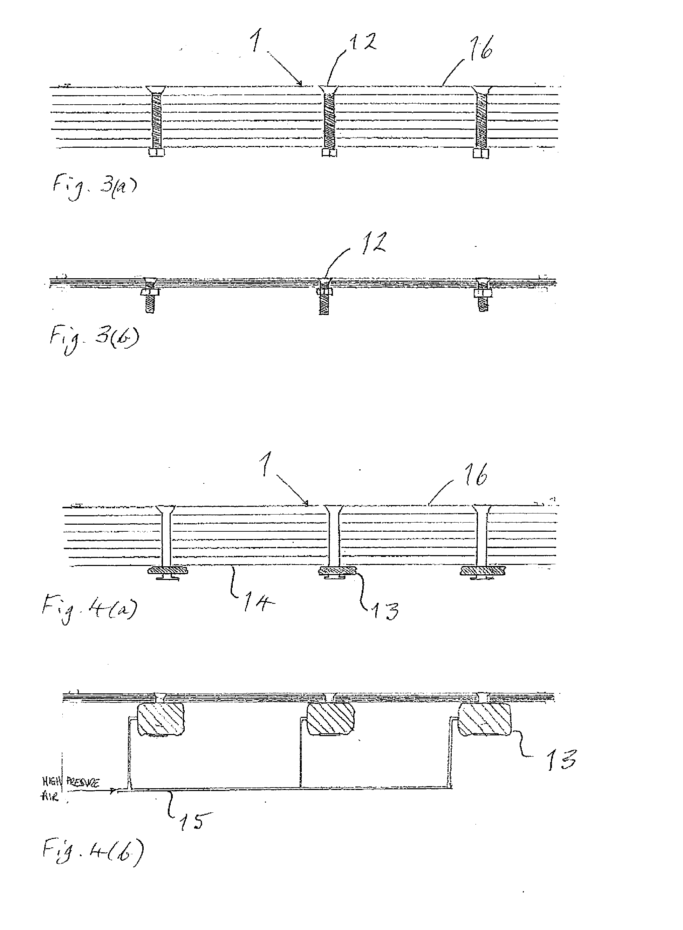

A vacuum system is limited to a clamping pressure of 100kPa (1atmosphere). Enhancement of the clamping pressure in localised regions may be achieved by employing a series of clamping elements, for example spring clamps (not shown) or screw clamps 12 as shown in Figures 3a and 3b.

A practical system may employ a series of pressurised air bladders 13 on an underside 14 of the tooling sheet to provide through-thickness compression of the plies. This would allow the application of localised pressure in excess of 100kPa, thus increasing the interlayer shear strength. In addition, the use of a branched high pressure supply 15 to each air bladder 13 would remove the onerous requirement of applying torque to a series of screw clamps 12.

As an alternative to the vacuum system described above, a series of interlayers 11 of polymeric material may be interspersed between the plies 2, as shown in Figure 2a and Figure 6. The addition of heating means 18 or 19, see Figure 6, to the arrangement will then allow the plies 2 and interlayers 11 to be heated. The heating will then either soften the interlayers and allow gradual slippage between the plies or, if sufficient heat is applied, will melt the interlayer material. Melting will allow a much faster bending of the plies and may be suitable for components being moulded by the tool to a higher curvature. Although the heating element 19 is shown extending over the underside 14 of the tooling sheet, in some circumstances it may be desirable to position the element within the tooling sheet, either between plies 2 or, if the plies themselves are constructed of a composite material, within one or more of the plies.

The heater 18 is a hot air heater and may be arranged also to supply cold air, for cooling the sheet rapidly, once it has reached its intended configuration for moulding to take place. The heater 19 is an electrically heated mat attached to the lower surface, or underside, 14 of the tooling sheet.

Turning to Figure 5, the tooling sheet 1 is shown attached to a rolling vacuum attachment 20. Each rolling vacuum attachment 20 is positioned at the top of a pogo 17. Each pogo is hollow, extendable with extreme accuracy, and connectable to a vacuum source (not shown). Each rolling vacuum attachment 20 comprises a hollow cup 21 which contains a rigid, perforated ball 22, freely rotatable in the cup. Around the periphery of the cup is positioned an elastomeric seal 23. This seal prevents air passing into the cup 21, which has a vacuum applied to it via the hollow pogo 17, except through perforations 24 in the ball. A peripheral rim 25 of the cup is arranged almost to touch a surface 26 of an elastomeric layer 27 on the underside of the tooling sheet. In this example, the elastomeric layer 27 is a closed cell foam material. However, the use of a homogeneous elastomeric layer may be preferred in certain circumstances. Thus only a minimal number of perforations will be exposed to the atmosphere and cause minimal reduction of the applied vacuum. In Figure 5 it will be observed that a small area 28 surrounding the cup has been drawn downwardly towards the cup by the applied vacuum. This feature increases the active surface area of the ball 22 and foam 27 in contact with each other and hence the attractive force existing between them.

It will be observed that rolling of the ball along the surface of the foam 26 will not either increase or decrease the surface areas of the ball and foam which are in contact with other. Thus, the only force resisting rolling movement will be friction between the cup and ball and relatively free rolling will result. Thus, even when the tooling sheet 1 is firmly attached to each pogo 17 by vacuum, the tooling sheet may be easily re-configured to a new moulding position, even if such movement involves fairly extreme relative positioning between adjacent pogoes which would otherwise result in considerable in-plane stress being applied to the sheet.

An additional aspect of the invention may be the use of a low surface energy polymer 16, for example a polyolefin, upper surface ply for the tooling sheet. This would provide self-release attributes to the mould tool surface, meaning that additional works, for example waxing and polishing, required to prepare a metal mould surface would not be required.

Such a low surface energy upper surface ply may be co-bonded to, or co-assembled with, the tooling sheet. An example of a suitable low surface energy polyolefin material for this purpose is a self-reinforced polypropylene such as Tegris (Milliken).

## Claims

1. A flexible manufacturing tool, including a multi-layer generally planar sheet of material defining a tool surface thereon, means to controllably deform the sheet by applying out-of-plane deforming forces to the sheet at predetermined locations across the sheet and means selectively to increase and decrease interlayer shear forces whereby to vary the flexural stiffness of the sheet.

2. A tool according to claim 1, in which the interlayer shear forces are frictional forces generated between adjacent layers of the sheet and wherein the means selectively to increase and decrease interlayer frictional forces comprises vacuum means adapted selectively to apply a vacuum between the layers.

3. A tool according to claim 2, in which the vacuum means comprises vacuum bagging means adapted to make airtight contact with a periphery of the sheet of material whereby to apply the vacuum between the layers.

4. A tool according to claim 2 or 3, in which the means selectively to increase and decrease interlayer frictional forces includes a series of interlocking features formed on adjacent layers.

5. A tool according to claim 1, in which the means selectively to increase and decrease the interlayer shear forces comprises layers of softenable material interspersed between the layers of the sheet and means to harden and soften the layers of softenable material, respectively.

6. A tool according to claim 5 in which the softenable material comprises a meltable material whereby the softenable material is softenable to the melting point of the material.

7. A tool according to claim 5 or 6, in which the means to harden and soften the softenable material comprise, respectively, cooling and heating means.

8. A tool according to claim 5, 6 or 7, in which the softenable material comprises a thermoplastic material.

9. A tool according to any of claims 2 to 4, in which the means selectively to increase and decrease the interlayer frictional forces includes clamping means selectively to apply pressure between the layers of the sheet at spaced locations across the sheet.

10. A tool according to any preceding claim in which the means to controllably deform the sheet comprises a series of adjustable supports for the sheet, and wherein each support is attachable to the sheet with a rolling vacuum attachment.

11. A tool according to claim 10 in which the rolling vacuum attachment comprises a hollow perforated ball rotatable in a cup, the ball being interengageable with a surface defined on the tooling sheet conformable to the curvature of the ball whereby to attach the ball to the conformable surface, the cup being attached to a said adjustable support and connectable to a vacuum source whereby to apply a vacuum between the perforated surface of the ball and the conformable surface of the tooling sheet and wherein the ball is rotatable across the conformable surface while vacuum is applied thereto.

12. A tool according to claim 11 in which the conformable surface is defined on an elastomeric layer.

13. A tool according to claim 11 or 12 in which the cup is slideably sealed to the ball in the region of a periphery of the cup.

14. A tool according to any preceding claim, including a layer of low surface energy polymer defining the said tool surface.

15. A method of configuring a tooling sheet for a flexible moulding tool, the tooling sheet comprising a multi-layer generally planar sheet of material defining a tool surface thereon and adjacent layers of the sheet defining a variable shear interface therebetween, the method including the steps of reducing the interlayer shear forces to reduce the overall flexural stiffness of the sheet, adjusting the shape of the sheet to a desired moulding configuration and thereafter increasing the interlayer shear forces to increase the overall flexural stiffness of the sheet for moulding to take place.
